# EUROPEAN PATENT APPLICATION

(11) **EP 4 714 730 A1**
(43) Date of publication of application: **25.03.2026**
(21) Application number: 24818214.9
(22) Date of filing: 08.01.2024
(51) Int. Cl.: B60L 53/60

(54) **CHARGING DEVICE AND POWER DISTRIBUTION METHOD**

(30) Priority: 07.06.2023 CN 202310670638
(71) Applicant: Huawei Digital Power Technologies Co., Ltd., Shenzhen, Guangdong 518043 (CN)
(72) Inventor: LIN, Quanxi, Shenzhen, Guangdong 518043 (CN); CHENG, Dong, Shenzhen, Guangdong 518043 (CN); HU, Minggui, Shenzhen, Guangdong 518043 (CN); LI, Junjie, Shenzhen, Guangdong 518043 (CN); GAO, Yaping, Shenzhen, Guangdong 518043 (CN)
(74) Representative: Maiwald GmbH
(86) International application number: PCT/CN2024/071172
(87) International publication number: WO 2024/250675

(57) **Abstract**

Embodiments of this application disclose a charging device and a power allocation method. A primary controller is configured to: obtain power information, where the power information includes an output power of each of charging interfaces and a required charging power of each of charged vehicles; and stop charging of a first target charged vehicle based on the obtained power information, and control a power allocation module to allocate, to a charging interface connected to a second target charged vehicle, a power output by a first target power module corresponding to the first target charged vehicle, where a required charging power of the second target charged vehicle is greater than an output power, existing before the first target power module is allocated, of the charging interface connected to the second target charged vehicle. In this way, one or more charged vehicles stop charging, power modules occupied by the one or more charged vehicles are released, and the released power modules are allocated to a charged vehicle whose required charging power is not met, thereby improving power utilization.

## Description

### CROSS-REFERENCE TO RELATED APPLICATIONS

This application claims priority to Chinese Patent Application No. 202310670638.5, filed with the China National Intellectual Property Administration on June 7, 2023 and entitled "CHARGING DEVICE AND POWER ALLOCATION METHOD", which is incorporated herein by reference in its entirety.

### TECHNICAL FIELD

This application relates to the field of charging technologies, and in particular, to a charging device and a power allocation method.

### BACKGROUND

Currently, power requirements of charged vehicles are increasingly different. There are vehicle models that support a maximum charging power of 480 kW, vehicle models that support a maximum charging power of 180 kW, and vehicle models that support a maximum charging power of less than 60 kW. To meet power requirements of different charged vehicles, charging devices that support hybrid charging of different charging powers have been launched in the market.

However, when a plurality of charged vehicles with different required charging powers are simultaneously charged by a charging device, slow-charged vehicles or low-power vehicles with high battery states of charge (State Of Charge, SOC) occupy a specific quantity of power modules for charging. When another charged vehicle has a high required charging power (for example, high-power fast charging), a maximum power that can be output by the charging device may be insufficient because charging utilization of the power modules occupied by the slow-charged vehicles or the low-power vehicles with the high battery remaining SOC is low. Consequently, power utilization cannot be improved.

### SUMMARY

Embodiments of this application provide a charging device and a power allocation method, to improve power utilization.

According to a first aspect, an embodiment of this application provides a charging device. The charging device may include a plurality of power modules, a power allocation module, a primary controller, and a plurality of charging interfaces. Output ends of the plurality of power modules are connected to the plurality of charging interfaces via the power allocation module, and the charging interfaces are connected to charging connectors in a one-to-one correspondence through cables. In addition, the power module is configured to output a direct current, the charging interface is configured to connect to a charged vehicle, and the power allocation module is configured to allocate, to the charging interface, a power output by the power module. During operation, the power allocation module may allocate a specific quantity of power modules to a corresponding charging interface, so that powers output by the power modules are output to the charging interface to which the power modules are allocated. Then, the charging interface is connected to a charged vehicle via a charging connector, to charge a power battery of the charged vehicle.

In addition, the plurality of power modules may include a first target power module and a second target power module. The first target power module is configured to charge a first target charged vehicle, and the second target power module is configured to charge a second target charged vehicle. In addition, the primary controller may obtain power information, where the power information includes output powers of all the charging interfaces and required charging powers that are of all the charged vehicles and that are obtained by communicating with the vehicles. Therefore, charging of the first target charged vehicle can be stopped based on the obtained power information, and the power allocation module is controlled to allocate, to a charging interface connected to the second target charged vehicle, a power output by the first target power module corresponding to the first target charged vehicle. A required charging power of the second target charged vehicle is greater than an output power, existing before the first target power module is allocated, of the charging interface connected to the second target charged vehicle. In this way, charging of one or more charged vehicles may be stopped, power modules occupied by the one or more charged vehicles may be released, and the released power modules are allocated to a charged vehicle whose required charging power is not met, so that a power is scheduled to the charged vehicle whose required charging power is not met, thereby improving power utilization.

For example, the charging device provided in this embodiment of this application may be applied to a direct current charging pile, for example, a split-type direct current charging pile and an integral direct current charging pile, or may be applied to a charging station.

Optionally, the power module may be connected to an alternating current power supply via a plurality of alternating current-direct current (Alternating Current-Direct Current, AC-DC) modules. In this case, input ends of the plurality of AC-DC modules are connected to the alternating current power supply, each of output ends of the plurality of AC-DC modules is connected to a positive direct current bus and a negative direct current bus, and each of input ends of the plurality of power modules is connected to the positive direct current bus and the negative direct current bus. When the charging device works, an AC-DC conversion circuit in the AC-DC module may convert an alternating current (for example, mains) output by the alternating current power supply into a direct current, and input the direct current obtained through converting to the positive direct current bus and the negative direct current bus. The power module performs voltage regulation (for example, boosting) on the direct current on the positive direct current bus Bus+ and the negative direct current bus Bus-. The power allocation module may allocate a specific quantity of power modules to a corresponding charging interface, so that currents output by the specific quantity of power modules are output to the charging interface, and the current is output to the charged vehicle via a charging connector, to charge a power battery of the charged vehicle. For example, the power module may include a direct current-direct current (Direct Current-Direct Current, DC-DC) module. In this case, a rated power of the power module may be a rated power of the DC-DC module.

Optionally, the power module may alternatively be directly connected to an alternating current power supply, convert an alternating current (for example, mains) output by the alternating current power supply into a direct current, and output the direct current to a corresponding charging interface via the power allocation module. For example, the power module may include an AC-DC module, and a rated power of the power module may be a rated power of the AC-DC module.

In addition, in this application, rated powers of different power modules may be the same, or may be partially the same and partially different, or may be all different.

In this application, the primary controller may determine, based on the obtained power information, whether power utilization of the power module is low. For example, the primary controller may determine, in response to a sum of rated powers of power modules corresponding to all the charging interfaces being greater than a sum of the output powers of all the charging interfaces and the sum of the rated powers of the power modules corresponding to all the charging interfaces being less than a sum of the required charging powers of all the charged vehicles, that the power utilization of the power module is low, so that charging of the first target charged vehicle can be stopped. After the first target charged vehicle stops charging, the primary controller may control the power allocation module to disconnect a charging interface connected to the first target charged vehicle from a power module occupied by the first target charged vehicle, to release a power module corresponding to the charging interface connected to the first target charged vehicle, so that an unoccupied power module appears. In addition, the power module is released after charging of the first target charged vehicle is stopped, so that a charging exception alarm of the first target charged vehicle can be further avoided.

In this application, the first target charged vehicle may be determined from all the charged vehicles in one or more determining manners. For example, the first target charged vehicle includes at least one of the following charged vehicles:
a charged vehicle connected to a charging interface corresponding to a minimum output power, where the minimum output power is a smallest value in the output powers of all the charging interfaces;
a charged vehicle corresponding to a minimum required charging power, where the minimum required charging power is a smallest value in the required charging powers of all the charged vehicles;
a charged vehicle corresponding to a maximum battery state of charge (State Of Charge, SOC), where the maximum battery state of charge is a largest value in battery states of charge of all the charged vehicles;
a charged vehicle connected to a charging interface corresponding to a first target output power, where the first target output power is an output power that is in the output powers of all the charging interfaces and that is less than a first power threshold;
a charged vehicle corresponding to a first target required charging power, where the first target required charging power is a required charging power that is in the required charging powers of all the charged vehicles and that is less than a second power threshold; and
a charged vehicle corresponding to a target battery state of charge, where the target battery state of charge is a battery state of charge that is in the battery states of charge of all the charged vehicles and that is greater than a battery state of charge threshold.

In this application, the second target charged vehicle may be determined from all the charged vehicles in one or more determining manners. For example, the second target charged vehicle includes at least one of the following charged vehicles:
a charged vehicle corresponding to a maximum required charging power, where the maximum required charging power is a largest value in second target required charging powers, and the second target required charging power is a required charging power that is in the required charging powers of all the charged vehicles and that is greater than output powers of charging interfaces corresponding to all the charged vehicles; and
a charged vehicle corresponding to a maximum required value, where the maximum required value is a largest value in required values corresponding to all the charged vehicles, and the required value corresponding to the charged vehicle is (B-A)/C, where A represents an output power, existing before the first target power module is allocated, of a charging interface corresponding to the charged vehicle, B represents a required charging power of the charged vehicle, and C represents a rated power of the first target power module.

It may be understood that, before the first target power module is allocated, a charging interface corresponding to the first target charged vehicle may occupy one or more first target power modules. When there is one first target power module, the foregoing rated power of the first target power module may be determined as a rated power of the first target power module. When there are a plurality of first target power modules, rated powers of the plurality of first target power modules may be the same, so that the foregoing rated power can be determined as a rated power of one of the plurality of first target power modules. Alternatively, rated powers of the plurality of first target power modules may be different or partially the same and partially different. In this case, the foregoing rated power of the first target power module may be determined as a smallest value, a largest value, an intermediate value, an average value (for example, an arithmetic average value or a weighted average value), or any value of the rated powers of the plurality of first target power modules.

In this application, a first target charged vehicle may be determined from the charged vehicles other than the first target charged vehicle in one or more determining manners.

For example, the primary controller may control the power allocation module to release all power modules occupied by the charging interface connected to the first target charged vehicle. Alternatively, the primary controller may control the power allocation module to release a second quantity of power modules in power modules occupied by the charging interface connected to the first target charged vehicle, and enable the second quantity to be less than or equal to a quantity of power modules that the second target charged vehicle still lacks and enable the second quantity to be less than or equal to a total quantity of power modules corresponding to the first target charged vehicle, so that the second quantity of power modules occupied by the charging interface connected to the first target charged vehicle are released. This can avoid releasing excessive power modules. Based on this, the primary controller may control the power allocation module to allocate a first quantity of first target power modules in the released power modules to the charging interface of the second target charged vehicle. The first quantity may be less than or equal to the total quantity of power modules corresponding to the first target charged vehicle, or the first quantity may be less than or equal to the second quantity. In this way, the device can avoid a waste of power caused by excessive first target power modules allocated to the charging interface connected to the second target charged vehicle.

The primary controller may further determine a third target charged vehicle from all the charged vehicles, where the third target charged vehicle is a charged vehicle that is being charged. In a process in which the third target charged vehicle is charged, a required charging power required by the third target charged vehicle decreases as charging time increases. Each time the required charging power decreases by a rated power of one third target power module (the third target power module is one of power modules occupied by a charging interface connected to the third target charged vehicle), the primary controller further controls the power allocation module to disconnect the charging interface connected to the third target charged vehicle from the one third target power module, so that an output power of the third target power module is zero. In this way, an unoccupied third target power module appears. Based on this, the primary controller determines one or more third target power modules from unoccupied third target power modules based on a required charging power of the first target charged vehicle, and controls the power allocation module to allocate the determined third target power modules to the charging interface connected to the first target charged vehicle, to resume charging of the first target charged vehicle charging. It may be understood that the third target charged vehicle may be one or more of charged vehicles other than the first target charged vehicle. For example, the third target charged vehicle may be the second target charged vehicle. In this case, the second target power module corresponding to the second target charged vehicle is released and then used as the third target power module, and the third target power module is allocated to the charging interface connected to the first target charged vehicle. Alternatively, the third target charged vehicle may be a charged vehicle other than the first target charged vehicle and the second target charged vehicle.

To implement allocation and release of the power module, the power allocation module may include a plurality of switches, and the plurality of switches are configured to connect/disconnect the power module to/from a corresponding charging interface. Based on this, the primary controller is further configured to control the plurality of switches to disconnect a power module that needs to be released from a corresponding charging interface, and connect a power module that needs to be allocated to a corresponding charging interface.

In this application, charging of the first target charged vehicle can be stopped and resumed in one or more manners.

For example, the primary controller is further configured to send a charging suspend instruction to the first target charged vehicle, and the first target charged vehicle may suspend charging in response to the charging suspend instruction, so that charging of the first target charged vehicle is stopped. In addition, the primary controller is further configured to send a charging resume instruction to the first target charged vehicle, and the first target charged vehicle may resume charging in response to the charging resume instruction, so that charging of the first target charged vehicle can be resumed.

For example, the charging device further includes a plurality of contactors. The plurality of contactors one-to-one correspond to the plurality of charging interfaces, and each of the charging interfaces is connected to the power allocation module via the contactor. In this case, the primary controller is further configured to control a contactor connected to the charging interface corresponding to the first target charged vehicle to be turned off, so that the charging interface is disconnected from the power allocation module, and the charging interface has no power input. In this case, the charging interface outputs no current, voltage, or power, so that charging of the first target charged vehicle is stopped. In addition, the primary controller is further configured to control the contactor connected to the charging interface corresponding to the first target charged vehicle to be turned on, so that the charging interface is connected to the power allocation module. In this way, when the charging interface outputs a current, a voltage, or a power, the first target charged vehicle can be charged.

For example, the primary controller is further configured to: send a charging suspend instruction to the first target charged vehicle, for the first target charged vehicle to stop charging; and then control the contactor of the charging interface corresponding to the first target charged vehicle to be turned off, to stop charging of the first target charged vehicle. In addition, the primary controller is further configured to: send a charging resume instruction to the first target charged vehicle, and then control the contactor of the charging interface corresponding to the first target charged vehicle to be turned on, to resume charging of the first target charged vehicle.

The foregoing manner of stopping charging and resuming charging of the first target charged vehicle may be applied to the integral direct current charging pile and the split-type direct current charging pile.

In the split-type direct current charging pile, the charging device further includes a plurality of terminal controllers, and the plurality of terminal controllers one-to-one correspond to the plurality of charging interfaces. For example, the primary controller is further configured to control a terminal controller corresponding to the first target charged vehicle to send a charging suspend instruction to the first target charged vehicle, and the first target charged vehicle suspends charging in response to the charging suspend instruction, so that charging of the first target charged vehicle is stopped. The primary controller is further configured to control the terminal controller corresponding to the first target charged vehicle to send a charging resume instruction to the first target charged vehicle, and the first target charged vehicle resumes charging, so that the first target charged vehicle is charged.

For example, the charging device further includes a plurality of contactors. The plurality of contactors one-to-one correspond to the plurality of charging interfaces, and each of the charging interfaces is connected to the power allocation module via the contactor. In this case, the primary controller is further configured to control the terminal controller corresponding to the first target charged vehicle to turn off a contactor of the corresponding charging interface, so that the charging interface is disconnected from the power allocation module. In this case, the charging interface outputs no current, voltage, or power, so that charging of the first target charged vehicle is stopped. In addition, the primary controller is further configured to control the terminal controller corresponding to the first target charged vehicle to turn on the contactor of the corresponding charging interface, so that the charging interface is connected to the power allocation module. In this way, when the charging interface outputs a current, a voltage, or a power, the first target charged vehicle can be charged.

For example, the primary controller is further configured to: control the terminal controller corresponding to the first target charged vehicle to send a charging suspend instruction to the first target charged vehicle, and then control the terminal controller corresponding to the first target charged vehicle to turn off the contactor of the corresponding charging interface, to stop charging of the first target charged vehicle. In addition, the primary controller is further configured to: control the terminal controller corresponding to the first target charged vehicle to send a charging resume instruction to the first target charged vehicle, and then control the terminal controller corresponding to the first target charged vehicle to turn on the contactor of the corresponding charging interface, to resume charging of the first target charged vehicle.

According to a second aspect, an embodiment of this application further provides a power allocation method, including: obtaining power information, and stopping charging of a first target charged vehicle based on the obtained power information, where the power information includes an output power of each of charging interfaces and a required charging power of each of charged vehicles; and controlling a power output by a first target power module corresponding to the first target charged vehicle to be allocated to a charging interface connected to a second target charged vehicle, where a required charging power of the second target charged vehicle is greater than an output power, existing before the first target power module is allocated, of the charging interface connected to the second target charged vehicle. In this way, charging of one or more charged vehicles may be stopped, power modules occupied by the one or more charged vehicles may be released, and the released power modules are allocated to a charged vehicle whose required charging power is not met, so that a power is scheduled to the charged vehicle whose required charging power is not met, thereby improving power utilization.

For example, stopping charging of the first target charged vehicle based on the obtained power information includes: in response to a sum of rated powers of power modules corresponding to all the charging interfaces being greater than a sum of the output powers of all the charging interfaces and the sum of the rated powers of the power modules corresponding to all the charging interfaces being less than a sum of the required charging powers of all the charged vehicles, stopping charging of the first target charged vehicle.

In this application, the first target charged vehicle may be determined from all the charged vehicles in one or more determining manners. For example, the first target charged vehicle includes at least one of the following charged vehicles:
a charged vehicle connected to a charging interface corresponding to a minimum output power, where the minimum output power is a smallest value in the output powers of all the charging interfaces;
a charged vehicle corresponding to a minimum required charging power, where the minimum required charging power is a smallest value in the required charging powers of all the charged vehicles;
a charged vehicle corresponding to a maximum battery state of charge, where the maximum battery state of charge is a largest value in battery states of charge of all the charged vehicles;
a charged vehicle connected to a charging interface corresponding to a first target output power, where the first target output power is an output power that is in the output powers of all the charging interfaces and that is less than a first power threshold;
a charged vehicle corresponding to a first target required charging power, where the first target required charging power is a required charging power that is in the required charging powers of all the charged vehicles and that is less than a second power threshold; and
a charged vehicle corresponding to a target battery state of charge, where the target battery state of charge is a battery state of charge that is in the battery states of charge of all the charged vehicles and that is greater than a battery state of charge threshold.

In this application, the second target charged vehicle may be determined from all the charged vehicles in one or more determining manners. For example, the second target charged vehicle includes at least one of the following charged vehicles:
a charged vehicle corresponding to a maximum required charging power, where the maximum required charging power is a largest required charging power in second target required charging powers, and the second target required charging power is a required charging power that is in the required charging powers of all the charged vehicles and that is greater than output powers corresponding to all the charged vehicles; and
a charged vehicle corresponding to a maximum required value, where the maximum required value is a largest value in required values corresponding to all the charged vehicles, and the required value corresponding to the charged vehicle is (B-A)/C, where A represents an output power, existing before the first target power module is allocated, of the charged vehicle, B represents a required charging power of the charged vehicle, and C represents a rated power of the first target power module.

It may be understood that, before the first target power module is allocated, a charging interface corresponding to the first target charged vehicle may occupy one or more first target power modules. When there is one first target power module, the foregoing rated power of the first target power module may be determined as a rated power of the first target power module. When there are a plurality of first target power modules, rated powers of the plurality of first target power modules may be the same, so that the foregoing rated power of the first target power module can be determined as a rated power of one of the plurality of first target power modules. Alternatively, rated powers of the plurality of first target power modules may be different or partially the same and partially different. In this case, the foregoing rated power of the first target power module may be determined as a smallest value, a largest value, an intermediate value, an average value (for example, an arithmetic average value or a weighted average value), or any value of the rated powers of the plurality of first target power modules.

In this application, a first target charged vehicle may be determined from the charged vehicles other than the first target charged vehicle in one or more determining manners.

For example, controlling the first target power module corresponding to the first target charged vehicle to be allocated to the charging interface connected to the second target charged vehicle may include: controlling a first quantity of first target power modules to be allocated to the charging interface connected to the second target charged vehicle, where the first quantity is less than or equal to a total quantity of power modules corresponding to the first target charged vehicle.

For example, the method may further include controlling a third target power module to be allocated to a charging interface connected to the first target charged vehicle, where an output power of the third target power module is zero.

In this application, charging of the first target charged vehicle can be stopped and resumed in one or more manners.

For example, the method further includes: sending a charging suspend instruction to the first target charged vehicle, to stop charging of the first target charged vehicle; and sending a charging resume instruction to the first target charged vehicle, to resume charging of the first target charged vehicle.

For example, the method further includes: controlling a contactor connected to the charging interface corresponding to the first target charged vehicle to be turned off, to stop charging of the first target charged vehicle; and controlling the contactor connected to the charging interface corresponding to the first target charged vehicle to be turned on, to resume charging of the first target charged vehicle.

For example, the method further includes: sending a charging suspend instruction to the first target charged vehicle, and then controlling the contactor connected to the charging interface corresponding to the first target charged vehicle to be turned off, to stop charging of the first target charged vehicle; and sending a charging resume instruction to the first target charged vehicle, and then controlling the contactor connected to the charging interface corresponding to the first target charged vehicle to be turned on, to resume charging of the first target charged vehicle.

The foregoing manner of stopping charging and resuming charging of the first target charged vehicle may be applied to an integral direct current charging pile and a split-type direct current charging pile.

In the split-type direct current charging pile, a charging device further includes a plurality of terminal controllers, and the plurality of terminal controllers one-to-one correspond to a plurality of charging interfaces. For example, the method further includes: controlling a terminal controller corresponding to the first target charged vehicle to send a charging suspend instruction to the first target charged vehicle, to stop charging of the first target charged vehicle; and controlling the terminal controller corresponding to the first target charged vehicle to send a charging resume instruction to the first target charged vehicle, to resume charging of the first target charged vehicle.

For example, the method further includes: controlling the terminal controller corresponding to the first target charged vehicle to turn off a contactor of the corresponding charging interface, to stop charging of the first target charged vehicle; and controlling the terminal controller corresponding to the first target charged vehicle to turn on the contactor of the corresponding charging interface, to charge the first target charged vehicle.

For example, the method further includes: controlling the terminal controller corresponding to the first target charged vehicle to send a charging suspend instruction to the first target charged vehicle, and then controlling the terminal controller corresponding to the first target charged vehicle to turn off the contactor of the corresponding charging interface, to stop charging of the first target charged vehicle; and controlling the terminal controller corresponding to the first target charged vehicle to send a charging resume instruction to the first target charged vehicle, and then controlling the terminal controller corresponding to the first target charged vehicle to turn on the contactor of the corresponding charging interface, to resume charging of the first target charged vehicle.

### BRIEF DESCRIPTION OF DRAWINGS

FIG. 1 is a diagram of a charging scenario according to an embodiment of this application;
FIG. 2 is a diagram of a structure of a charging device according to an embodiment of this application;
FIG. 3 is a diagram of a charging scenario for a charging device according to an embodiment of this application;
FIG. 4 is a diagram of a structure of a charging device in a charging scenario according to still another embodiment of this application;
FIG. 5 is a diagram of a structure of a charging device in a charging scenario according to still another embodiment of this application;
FIG. 6 is a diagram of a structure of a charging device according to still another embodiment of this application;
FIG. 7 is a diagram of a structure of a charging device according to still another embodiment of this application;
FIG. 8 is a diagram of a structure of a charging device according to still another embodiment of this application; and
FIG. 9 is a flowchart of a power allocation method according to an embodiment of this application.

Reference numerals:
100\100a\100b\100c: charged vehicle; 110: charging input interface; 120: power battery; 130: vehicle management system; 140: motor; 150: wheel; 200: charging device; 210: charging connector; 220: cable; 230: charging power unit; 240: charging terminal; 231: alternating current-direct current module; Bus+: positive direct current bus; Bus-: negative direct current bus; 232a\232b\232c\232d\232e\232f\232g\232h: power module; 233: power allocation module; 234a\234b\234c: contactor; 241a\241b\241c: charging interface; 242a\242b\242c: terminal controller; 250: primary controller; and 300: alternating current power supply.

### DESCRIPTION OF EMBODIMENTS

To make the objectives, technical solutions, and advantages of this application clearer, the following further describes this application in detail with reference to the accompanying drawings. In embodiments of this application, a "connection" refers to an electrical connection, and a connection between two electrical elements may be a direct or indirect connection between the two electrical elements. For example, that A is connected to B may be that A is directly connected to B, or may be that A is indirectly connected to B via one or more other electrical elements. For example, that A is connected to B may alternatively be that A is directly connected to C, and C is directly connected to B, so that A is connected to B through C.

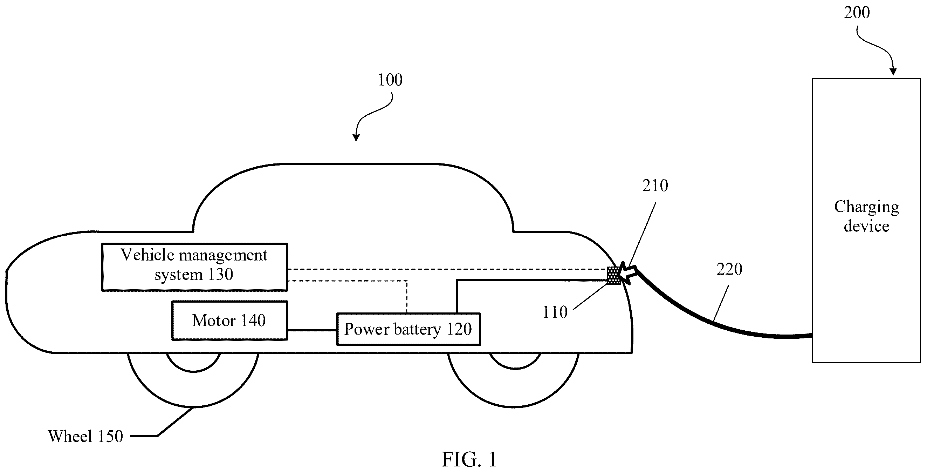

FIG. 1 is a diagram of a charging scenario according to an embodiment of this application. Refer to FIG. 1. A charged vehicle 100 is also referred to as a new energy vehicle, and is a vehicle that can be driven by using electric energy. It should be understood that the charged vehicle 100 may be an electric vehicle driven by pure electric power, or may be a hybrid vehicle driven by hybrid power. For example, the charged vehicle 100 mainly includes a charging input interface 110, a power battery 120, a vehicle management system 130, a motor 140, wheels 150, and the like. The power battery 120 is a battery with a large capacity and a high power. The power battery 120 may supply electric energy to some or all components of the charged vehicle 100. In some examples, the power battery 120 may include one or more rechargeable lithium-ion or lead-acid batteries. In addition, the power battery 120 may also use another battery material and configuration. This is not limited herein. When the charged vehicle 100 travels, the power battery 120 supplies power to the motor 140. The motor 140 converts electric energy provided by the power battery 120 into mechanical energy, and drives the wheels 150 to rotate, to implement traveling of the charged vehicle 100. In addition, when the charged vehicle 100 is charged, the power battery 120 of the charged vehicle 100 may be charged by a charging device 200. The charging device 200 is connected to an alternating current power supply, and the charging device 200 is connected to a charging connector 210 through a cable 220. An operator may insert the charging connector 210 into the charging input interface 110 of the charged vehicle 100, and the charging device 200 further charges the power battery 120 via the charging connector 210. It may be understood that the vehicle management system includes but is not limited to a battery management system (Battery Management System, BMS).

The charging device provided in this embodiment of this application may be applied to a direct current charging pile, for example, a split-type direct current charging pile and an integral direct current charging pile, or may be applied to a charging station. It may be understood that the charging device provided in this embodiment of this application is intended to include but be not limited to being used in these devices and any other suitable type of device. The following describes the technical solutions of this application by using an example in which the charging device is separately applied to two application scenarios: the split-type direct current charging pile and the integral direct current charging pile.

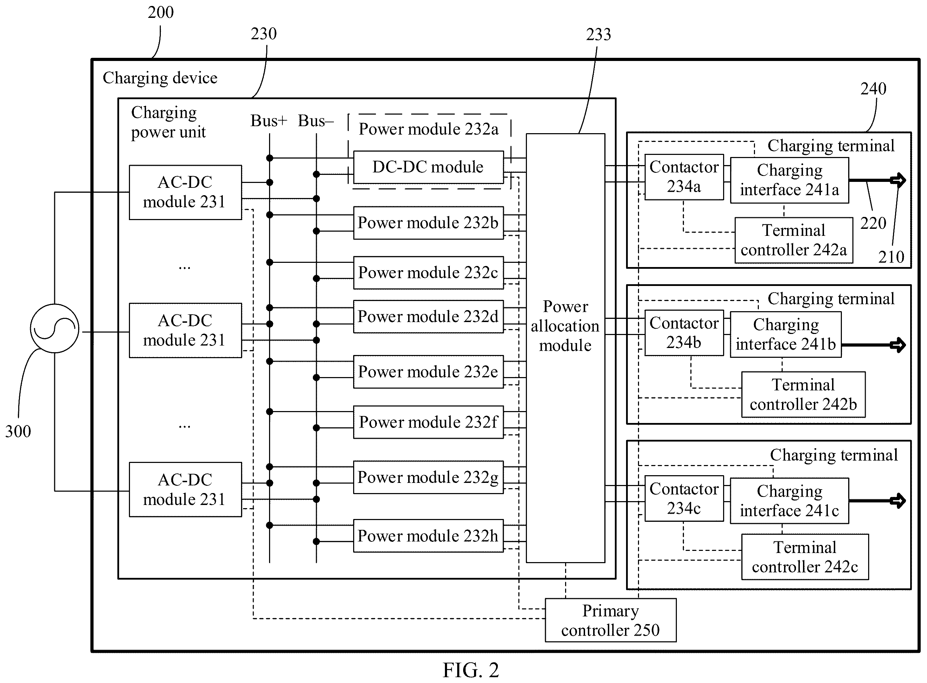

FIG. 2 is a diagram of a structure of a charging device according to an embodiment of this application. Refer to FIG. 2. In this embodiment of this application, a charging device 200 may be disposed as a split-type direct current charging pile. The charging device 200 includes a plurality of alternating current-direct current (Alternating Current-Direct Current, AC-DC) modules 231, a positive direct current bus Bus+, a negative direct current bus Bus-, a plurality of power modules 232a to 232h, a power allocation module 233, a plurality of contactors 234a to 234c, a plurality of charging interfaces 241a to 241c, a primary controller 250, a plurality of terminal controllers 242a to 242c, cables 220, and charging connectors 210. Input ends of the plurality of AC-DC modules 231 are connected to an alternating current power supply 300, and each of output ends of the plurality of AC-DC modules 231 is connected to the positive direct current bus Bus+ and the negative direct current bus Bus-. Each of input ends of the plurality of power modules is connected to the positive direct current bus Bus+ and the negative direct current bus Bus-, and output ends of the plurality of power modules are connected to the power allocation module 233. The power allocation module 233 is connected to the charging interface 241a via the contactor 234a, the power allocation module 233 is connected to the charging interface 241b via the contactor 234b, and the power allocation module 233 is connected to the charging interface 241c via the contactor 234c. In addition, the charging interfaces 241a to 241c are connected to the charging connectors 210 in a one-to-one correspondence through the cables 220. In addition, a quantity of AC-DC modules 231 and a quantity of power modules are not limited in this application, and may be determined based on an actual application requirement.

When the charging device 200 works, an AC-DC conversion circuit in the AC-DC module 231 may convert an alternating current (for example, mains) output by the alternating current power supply 300 into a direct current, and input the direct current obtained through converting to the positive direct current bus Bus+ and the negative direct current bus Bus-. The power module performs voltage regulation (for example, boosting) on the direct current on the positive direct current bus Bus+ and the negative direct current bus Bus-. The power allocation module 233 allocates a specific quantity of power modules to a corresponding charging interface, and a contactor corresponding to the charging interface is turned on, so that currents output by the specific quantity of power modules are output to the charging interface, and the current is output to a charged vehicle via the charging connector 210. In addition, the AC-DC module 231 and the power module each have a rated power. Rated powers of different AC-DC modules 231 may be the same, or may be partially the same and partially different, or may be all different. The primary controller may communicate with the AC-DC module 231, to obtain a rated power, an output power, and the like of the AC-DC module 231. In addition, rated powers of different power modules may be the same, or may be partially the same and partially different, or may be all different. The primary controller 250 may communicate with the power modules 232a to 232h, to obtain rated powers, output powers, and the like of the power modules. Optionally, the power module includes a direct current-direct current (Direct Current-Direct Current, DC-DC) module. A rated power of the power module may be a rated power of the DC-DC module. In addition, rated powers of different DC-DC modules may be the same, or may be partially the same and partially different, or may be all different. A DC-DC conversion circuit in the DC-DC module may perform voltage regulation (for example, boosting) on a direct current on the positive direct current bus Bus+ and the negative direct current bus Bus-, and then output a direct current to a charging interface to which the direct current is allocated.

It may be understood that, in a process in which the charged vehicle is charged, a contactor of a charging interface connected to the charged vehicle is turned on, so that a power output by the power module can be input to the charging interface.

Generally, a main structure of the split-type direct current charging pile includes a charging power unit 230 and a charging terminal 240. The charging power unit 230 may be provided with the plurality of AC-DC modules 231, the positive direct current bus Bus+, the negative direct current bus Bus-, the plurality of power modules 232a to 232h, the power allocation module 233, and the primary controller 250. A first charging terminal 240 is provided with the terminal controller 242a, the contactor 234a, the charging interface 241a, the cable 220, and the charging connector 210. A second charging terminal 240 is provided with the terminal controller 242b, the contactor 234b, the charging interface 241b, the cable 220, and the charging connector 210. A third charging terminal 240 is provided with the terminal controller 242c, the contactor 234c, the charging interface 241c, the cable 220, and the charging connector 210. It may be understood that, in addition to the foregoing structures, the charging power unit 230 and the charging terminal 240 may be separately provided with other structures (for example, a protective component, a heat dissipation component, and a power distribution component). This is not limited herein. In addition, a quantity of charging terminals 240 is not limited in this application. For example, two, three, or more charging terminals 240 may be disposed. In addition, a quantity of charging connectors 210 of each charging terminal 240 is not limited in this application. For example, each charging terminal 240 may have one, two, three, or more charging connectors 210. In this application, an example in which there are three charging terminals 240 and one charging connector 210 is disposed on each charging terminal 240 is used.

A specific implementation of the power allocation module is not limited in this application. For example, the power allocation module may include a plurality of switches, and the plurality of switches may connect/disconnect the power module to/from a corresponding charging interface. In this way, a closed circuit or an open circuit can be formed between the power module and the corresponding charging interface. It may be understood that the switch in embodiments of this application may be a relay, a contactor, or the like.

In addition to functions in this application, the terminal controller and the primary controller in this application may further perform functions in the conventional technology. Details are not described herein. A specific implementation of the primary controller and a specific implementation of the terminal controller are not limited in this application. For example, the primary controller and the terminal controller each may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

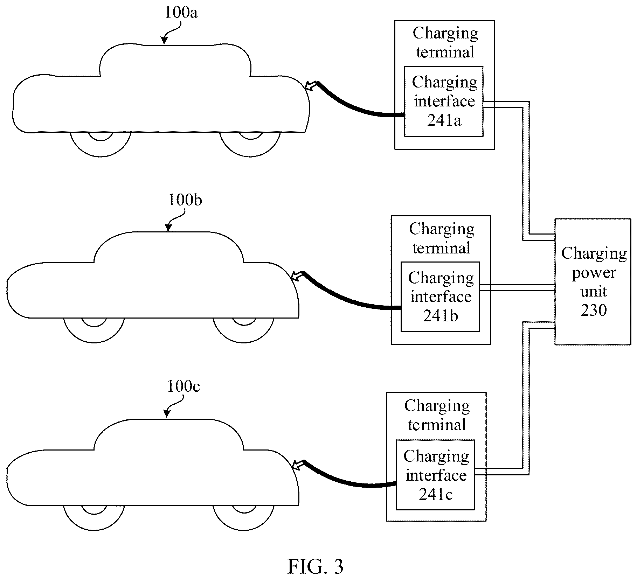

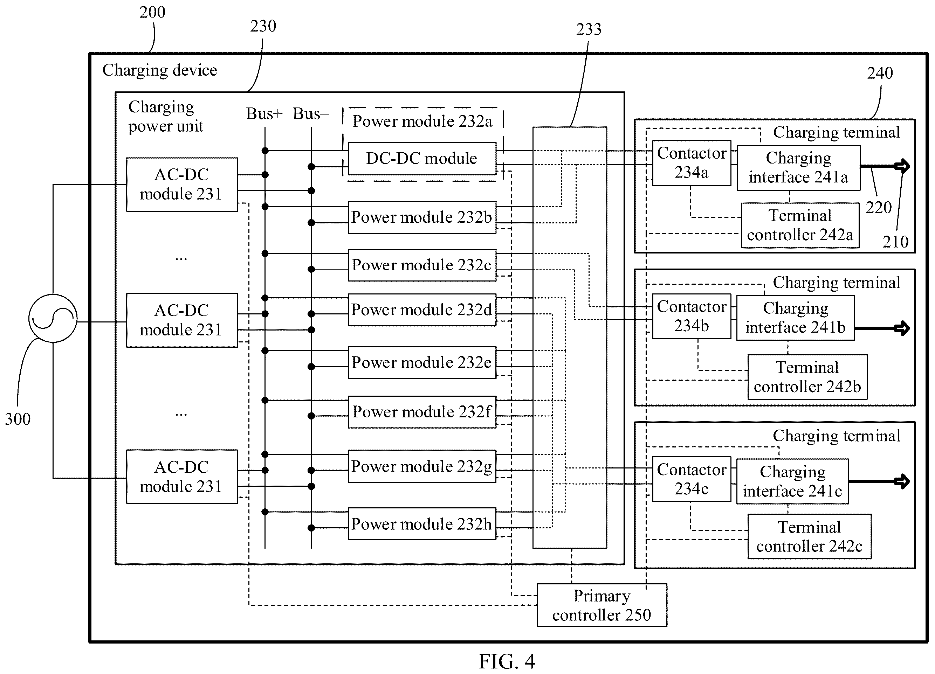

FIG. 3 is a diagram of a charging scenario for a charging device according to an embodiment of this application. FIG. 4 is a diagram of a structure of a charging device in a charging scenario according to still another embodiment of this application. Refer to FIG. 3 and FIG. 4. Three charged vehicles 100a to 100c are used as an example. If the charged vehicle 100a is connected to a charging interface 241a via a charging connector 210 for charging, the charged vehicle 100b is connected to a charging interface 241b via a charging connector 210 for charging, and the charged vehicle 100c is connected to a charging interface 241c via a charging connector 210 for charging, a primary controller 250 may communicate with a vehicle management system in each of the charged vehicles 100a to 100c, and the vehicle management system in each of the charged vehicles 100a to 100c may report data like a required charging power of the vehicle and a battery state of charge (State Of Charge, SOC) of a battery to the primary controller 250, so that the primary controller 250 can obtain the required charging power of each of the charged vehicles 100a to 100c. In addition, a rated power of each of power modules 232a to 232h may be stored in the primary controller 250 in advance, or may be obtained through communication with a power controller in each of the power modules 232a to 232h. Based on this, the primary controller 250 may obtain the rated powers of the power modules occupied by the charging interfaces 241a to 241c. It may be understood that the power module occupied by the charging interface is a power module that is connected to the charging interface by turning on a switch in a power allocation module 233. In addition, terminal controllers 242a to 242c may monitor output powers of the corresponding charging interfaces 241a to 241c in real time or periodically, and report the output powers of the corresponding charging interfaces 241a to 241c to the primary controller 250, and the primary controller 250 may obtain the output powers of the charging interfaces 241a to 241c. Alternatively, the primary controller 250 may directly monitor output powers of the charging interfaces 241a to 241c in real time or periodically, to obtain the output powers of the charging interfaces 241a to 241c.

The primary controller 250 may determine, based on the obtained output powers of the charging interfaces 241a to 241c, the rated powers of the power modules occupied by the charging interfaces 241a to 241c, and the required charging powers of the charged vehicles 100a to 100c, whether the power usage of the power module is low. For example, a condition M2<M1<M3 (M1 represents a sum of the rated powers of the power modules occupied by the charging interfaces 241a to 241c, M2 represents a sum of the output powers of the charging interfaces 241a to 241c, and M3 represents a sum of the required charging powers of the charged vehicles 100a to 100c) or another possible condition is met, it indicates that there is a problem of low power utilization of the power module. Therefore, a first target charged vehicle and a second target charged vehicle may be determined from the charged vehicles 100a to 100c. A required charging power of the second target charged vehicle is greater than an output power, existing before a first target power module is allocated, of a charging interface connected to the second target charged vehicle. In other words, the second target charged vehicle is a vehicle whose actual charging power is less than a required charging power. Based on this, the primary controller 250 may stop charging of the first target charged vehicle, and after the first target charged vehicle stops charging, control the switch in the power allocation module 233 to disconnect a closed circuit between the charging interface connected to the first target charged vehicle and a corresponding power module, to release the power module occupied by the charging interface connected to the first target charged vehicle. In addition, the power module is released after charging of the first target charged vehicle is stopped, so that a charging exception alarm of the first target charged vehicle can be further avoided.

Because the power module is released, the primary controller 250 may further control the switch in the power allocation module 233 to connect the first target power module in released power modules to the charging interface connected to the second target charged vehicle, to allocate a power output by the first target power module to the charging interface connected to the second target charged vehicle. The required charging power of the second target charged vehicle is greater than the output power, existing before the first target power module is allocated, of the charging interface connected to the second target charged vehicle, that is, the second target charged vehicle is a vehicle whose required charging power is not met. Therefore, in this embodiment of this application, charging of one or more charged vehicles may be suspended, power modules occupied by the one or more charged vehicles are released, and the released power modules are allocated to a charged vehicle whose required charging power is not met, so that a power is scheduled to the charged vehicle whose required charging power is not met, thereby improving power utilization of the power module, and improving overall charging utilization of the charging device.

In this application, the first target charged vehicle may be determined from the charged vehicles 100a to 100c in one or more determining manners. The following provides detailed descriptions with reference to examples. It may be understood that the following embodiments are intended to better explain this application, but are not intended to limit this application.

Manner 1: The primary controller 250 may determine a smallest value in an output power SPa of the charging interface 241a, an output power SPb of the charging interface 241b, and an output power SPc of the charging interface 241b, and determine the smallest value as a minimum output power. For example, if SPc>SPa>SPb, the output power SPb is the minimum output power, so that the charged vehicle 100b connected to the charging interface 241b corresponding to the minimum output power SPb can be determined as the first target charged vehicle, to stop charging of the charged vehicle 100b. It may be understood that the output powers Spa to SPc are the output powers, existing before the first target power module is allocated, of the charging interfaces 241a to 241c respectively.

Manner 2: The primary controller 250 may compare an output power SPa of the charging interface 241a, an output power SPb of the charging interface 241b, and an output power SPc of the charging interface 241b with a first power threshold SPw. If Spa>Spw, Spc>Spw, and Spb<Spw, the output power SPb may be determined as a first target output power, so that the charged vehicle 100b connected to the charging interface 241b corresponding to the output power SPb can be determined as the first target charged vehicle, to stop charging of the charged vehicle 100b. Alternatively, if Spa<Spw, Spc>Spw, and Spb<Spw, the output power SPa and SPb may be determined as first target output powers, so that both the charged vehicle 100a connected to the charging interface 241a corresponding to the output power SPa and the charged vehicle 100b connected to the charging interface 241b corresponding to the output power SPb can be determined as first target charged vehicles, to stop charging of both the charged vehicle 100a and the charged vehicle 100b. It may be understood that the first power threshold SPw is not limited in this application, and may be determined based on an actual application requirement. For example, the first power threshold may be determined based on a rated power of a power module (namely, a DC-DC module). For example, the first power threshold is Q*P, where 0<Q≤1 (or 0<Q≤0.5, 0<Q≤0.25, or 0<Q≤0.1), and P indicates the rated power of the power module (DC-DC module).

Manner 3: The primary controller 250 may determine a smallest value in a required charging power SQa of the charged vehicle 100a, a required charging power SQb of the charged vehicle 100b, and a required charging power SQc of the charged vehicle 100c, and determine the smallest value as a minimum required charging power. For example, if SQc>SQa>SQb, the required charging power SQb is the minimum required charging power, so that the charged vehicle 100b corresponding to the minimum required charging power SQb can be determined as the first target charged vehicle, to stop charging of the charged vehicle 100b.

Manner 4: The primary controller 250 may compare a required charging power SQa of the charged vehicle 100a, a required charging power SQb of the charged vehicle 100b, and a required charging power SQc of the charged vehicle 100c with a second power threshold SQw. If SQa>SQw, SQc>SQw, and SQb<SQw, the required charging power SQb may be determined as a first target required charging power, so that the charged vehicle 100b corresponding to the first target required charging power SQb can be determined as the first target charged vehicle. Alternatively, if SQa<SQw, SQc>SQw, and SQb<SQw, the required charging powers SQa and SQb may be determined as first target required charging powers, so that both the charged vehicle 100a corresponding to the required charging power SQa and the charged vehicle 100b corresponding to the required charging power SQb can be determined as first target charged vehicles, to stop charging of both the charged vehicle 100a and the charged vehicle 100b. It may be understood that the second power threshold is not limited in this application, and may be determined based on an actual application requirement. For example, the second power threshold may be determined based on a rated power of a power module (namely, a DC-DC module). For example, the second power threshold is K*P, where 0<K≤1 (or 0<K≤0.5, 0<K≤0.25, or 0<K≤0.1).

Manner 5: The primary controller 250 may determine a largest value in a battery state of charge SCa of the charged vehicle 100a, a battery state of charge SCb of the charged vehicle 100b, and a battery state of charge SCc of the charged vehicle 100c, and determine the largest value as a maximum state of charge. For example, if SCb>SCa>SCc, the battery state of charge SCb is the maximum state of charge, so that the charged vehicle 100b corresponding to the battery state of charge SCb can be determined as the first target charged vehicle, to stop charging of the charged vehicle 100b.

Manner 6: The primary controller 250 may compare a battery state of charge SCa of the charged vehicle 100a, a battery state of charge SCb of the charged vehicle 100b, and a battery state of charge SCc of the charged vehicle 100c with a battery state of charge threshold SCw. If SCb>SCw, SCa<SCw, and SCc<SCw, the battery state of charge SCb is determined as a target battery state of charge, so that the charged vehicle 100b corresponding to the target battery state of charge SCb can be determined as the first target charged vehicle, to stop charging of the charged vehicle 100b. Alternatively, if SCb>SCw, SCa>SCw, and SCc<SCw, the battery state of charge SCa and the battery state of charge SCb are determined as target battery states of charge, so that the charged vehicle 100a corresponding to the target battery state of charge SCa and the charged vehicle 100b corresponding to the target battery state of charge SCb can be determined as first target charged vehicles, to stop charging of the charged vehicles 100a and 100b. It may be understood that the battery state of charge threshold is not limited in this application, and may be determined based on an actual application requirement. For example, a battery state of charge threshold interval may be 55% to 85%. For example, the battery state of charge threshold may be 55%, 60%, 75%, 80%, or 85%.

In this application, the second target charged vehicle may be determined from the charged vehicles 100a to 100c in one or more determining manners. The following provides detailed descriptions with reference to examples. It may be understood that the following embodiments are intended to better explain this application, but are not intended to limit this application.

Manner 1: The primary controller 250 may compare a required charging power SQa of the charged vehicle 100a with an output power SPa of the charging interface 241a, compare a required charging power SQb of the charged vehicle 100b with an output power SPb of the charging interface 241b, and compare a required charging power SQc of the charged vehicle 100c with an output power SPc of the charging interface 241c. If SQa>SPa, and SQc>SPc, the required charging powers SQa and SQc may be determined as second target required charging powers. If SQc>SQa, the second target required charging power SQc may be determined as a maximum required charging power, and the charged vehicle 100c corresponding to the maximum required charging power SQc is determined as the second target charged vehicle, so that the first target power module can be allocated to the charging interface 241c connected to the charged vehicle 100c.

Manner 2: The primary controller 250 may determine, based on an output power Spa of the charging interface 241a (the output power, existing before the first target power module is allocated, of the charging interface 241a), a required charging power SQa of the charged vehicle 100a, and a rated power P0 of the first target power module, a required value (B-A)/C=(SQa-Spa)/P0 corresponding to the charged vehicle 100a, determine, based on an output power Spb of the charging interface 241b (the output power, existing before the first target power module is allocated, of the charging interface 241b), a required charging power SQb of the charged vehicle 100b, and the rated power P0 of the first target power module, a required value (B-A)/C=(SQb-Spb)/P0 corresponding to the charged vehicle 100b, and determine, based on an output power Spc of the charging interface 241c (the output power, existing before the first target power module is allocated, of the charging interface 241c), a required charging power SQc of the charged vehicle 100c, and the rated power P0 of the first target power module, a required value (B-A)/C=(SQc-Spc)/P0 corresponding to the charged vehicle 100c. If (SQb-Spb)/P0<(SQa-Spa)/P0<(SQc-Spc)/P0, a maximum required value is (SQc-Spc)/P0. Based on this, the charged vehicle 100c may be determined as the second target charged vehicle, so that the first target power module can be allocated to the charging interface 241c connected to the charged vehicle 100c.

In this application, the second target charged vehicle may be determined from the charged vehicles other than the first target charged vehicle in one or more determining manners. The following provides detailed descriptions with reference to examples. It may be understood that the following embodiments are intended to better explain this application, but are not intended to limit this application.

Manner 1: If the charged vehicle 100b is determined as the first target charged vehicle, the second target charged vehicle may be determined from the charged vehicles 100a and 100c. For example, the primary controller 250 may compare a required charging power SQa of the charged vehicle 100a with an output power SPa of the charging interface 241a, and compare a required charging power SQc of the charged vehicle 100c with an output power SPc of the charging interface 241c. If SQa>SPa, and SQc>SPc, the required charging powers SQa and SQc may be determined as second target required charging powers. If SQc>SQa, the second target required charging power SQc may be determined as a maximum required charging power, and the charged vehicle 100c corresponding to the maximum required charging power SQc is determined as the second target charged vehicle, so that the first target power module can be allocated to the charging interface 241c connected to the charged vehicle 100c.

Manner 2: If the charged vehicle 100b is determined as the first target charged vehicle, the primary controller 250 may determine, based on an output power Spa of the charging interface 241a (an output power, existing before the first target power module is allocated, of the charging interface 241a), a required charging power SQa of the charged vehicle 100a, and a rated power P0 of the first target power module, a required value (B-A)/C=(SQa-Spa)/P0 corresponding to the charged vehicle 100a, and determine, based on an output power Spc of the charging interface 241c (an output power, existing before the first target power module is allocated, of the charging interface 241c), a required charging power SQc of the charged vehicle 100c, and the rated power P0 of the first target power module, a required value (B-A)/C=(SQc-Spc)/P0 corresponding to the charged vehicle 100c. If (SQa-Spa)/P0<(SQc-Spc)/P0, a maximum required value is (SQc-Spc)/P0. Based on this, the charged vehicle 100c may be determined as the second target charged vehicle, so that the first target power module can be allocated to the charging interface 241c connected to the charged vehicle 100c.

It may be understood that, before the first target power module is allocated, a charging interface corresponding to the first target charged vehicle may occupy one or more first target power modules. When there is one first target power module, P0 may be determined as a rated power of the first target power module. When there are a plurality of first target power modules, rated powers of the plurality of first target power modules may be the same, so that P0 can be determined as a rated power of one of the plurality of first target power modules. Alternatively, rated powers of the plurality of first target power modules may be different or partially the same and partially different. In this case, P0 may be determined as a smallest value, a largest value, an intermediate value, an average value (for example, an arithmetic average value or a weighted average value), or any value of the rated powers of the plurality of first target power modules.

For example, the primary controller 250 may control the switch in the power allocation module 233 to disconnect all power modules occupied by the charging interface connected to the first target charged vehicle, to release all the power modules occupied by the charging interface connected to the first target charged vehicle. Alternatively, the primary controller 250 may control the switch in the power allocation module 233 to disconnect a second quantity of power modules in power modules occupied by the charging interface connected to the first target charged vehicle, and enable the second quantity to be less than or equal to a quantity of power modules that the second target charged vehicle still lacks and enable the second quantity to be less than or equal to a total quantity of power modules corresponding to the first target charged vehicle, so that the second quantity of power modules occupied by the charging interface connected to the first target charged vehicle are released. This can avoid releasing excessive power modules. Based on this, the primary controller 250 may control the switch in the power allocation module 233 to allocate a first quantity of first target power modules in the released power modules to the charging interface of the second target charged vehicle. The first quantity may be less than or equal to the total quantity of power modules corresponding to the first target charged vehicle, or the first quantity may be less than or equal to the second quantity. In this way, the device can avoid a waste of power caused by excessive first target power modules allocated to the charging interface connected to the second target charged vehicle.

In addition, the primary controller 250 may further determine a third target charged vehicle from the charged vehicles 100a to 100c, where the third target charged vehicle is a charged vehicle that is being charged. In a process in which the third target charged vehicle is charged, a required charging power required by the third target charged vehicle decreases as charging time increases. Each time the required charging power decreases by a rated power of one third target power module (the third target power module is one of power modules occupied by a charging interface connected to the third target charged vehicle), the primary controller 250 further controls the switch in the power allocation module 233 to disconnect the charging interface connected to the third target charged vehicle from one third target power module, so that an output power of the third target power module is zero. In this way, an unoccupied third target power module appears. Based on this, the primary controller 250 determines one or more third target power modules from unoccupied third target power modules based on a required charging power of the first target charged vehicle, and controls the switch in the power allocation module 233 to allocate the determined third target power modules to the charging interface connected to the first target charged vehicle, to resume charging of the first target charged vehicle. It may be understood that the third target charged vehicle may be one or more of charged vehicles other than the first target charged vehicle. For example, the third target charged vehicle may be the second target charged vehicle. In this case, a second target power module corresponding to the second target charged vehicle is released and then used as the third target power module, and the third target power module is allocated to the charging interface connected to the first target charged vehicle. Alternatively, the third target charged vehicle may be a charged vehicle other than the first target charged vehicle and the second target charged vehicle.

In this application, charging of the first target charged vehicle can be stopped and resumed in one or more manners. The following provides detailed descriptions with reference to examples. It may be understood that the following embodiments are intended to better explain this application, but are not intended to limit this application.

Manner 1: The primary controller 250 may send a charging suspend instruction to the first target charged vehicle, and the first target charged vehicle suspends charging in response to the charging suspend instruction. In this case, the charging connector 210 connected to the first target charged vehicle is not ejected, that is, the charging connector 210 is still connected to a charging input interface of the first target charged vehicle, however, the output power of the charging interface connected to the first target charged vehicle is zero, so that charging of the first target charged vehicle is stopped. The primary controller 250 may send a charging resume instruction to the first target charged vehicle, and the first target charged vehicle resumes charging in response to the charging resume instruction, so that charging of the first target charged vehicle is resumed. It may be understood that a process in which the first target charged vehicle suspends charging in response to the charging suspend instruction includes but is not limited to the following: The vehicle management system communicates with the primary controller, reduces the required charging power of the first target charged vehicle, and sends reduced required current and voltage information to the primary controller, and the primary controller controls a current and a voltage of the charging interface connected to the first target charged vehicle to be reduced until the primary controller controls the current and the voltage of the charging interface connected to the first target charged vehicle to be reduced to 0, so that the output power of the charging interface is zero, and charging of the first target charged vehicle is stopped.

Manner 2: The primary controller 250 may control a contactor of a charging interface corresponding to the first target charged vehicle to be turned off, so that the charging interface has no power input. In this case, the charging interface outputs no current, voltage, or power, so that charging of the first target charged vehicle is stopped. In addition, the primary controller 250 may control the contactor of the charging interface corresponding to the first target charged vehicle to be turned on, so that the charging interface is connected to the power allocation module. When the charging interface outputs a current, a voltage, or a power, charging of the first target charged vehicle can be resumed.

Manner 3: The primary controller 250 may send a charging suspend instruction to the first target charged vehicle, the first target charged vehicle suspends charging in response to the charging suspend instruction, and then the primary controller 250 may control a contactor of a charging interface corresponding to the first target charged vehicle to be turned off, so that charging of the first target charged vehicle is stopped. In addition, the primary controller 250 may send a charging resume instruction to the first target charged vehicle, the first target charged vehicle resumes charging in response to the charging resume instruction, and then the primary controller 250 may control the contactor of the charging interface corresponding to the first target charged vehicle to be turned on, so that charging of the first target charged vehicle is resumed.

Manner 4: The primary controller 250 may send a charging end instruction to the first target charged vehicle, and the first target charged vehicle ends charging in response to the charging end instruction. In this case, the charging connector 210 connected to the first target charged vehicle is ejected, and the charging connector 210 is disconnected from a charging input interface of the first target charged vehicle, so that charging of the first target charged vehicle is stopped. An operator inserts the charging connector 210 into the charging input interface of the charged vehicle again, the primary controller 250 may send a charging instruction to the first target charged vehicle, and the first target charged vehicle enters a charging mode in response to the charging instruction, to resume charging.

Manner 5: The primary controller 250 may send a charging end instruction to the first target charged vehicle, the first target charged vehicle ends charging in response to the charging end instruction, and then the primary controller 250 may control a contactor corresponding to a charging interface of the first target charged vehicle to be turned off, so that charging of the first target charged vehicle is stopped. An operator inserts the charging connector 210 into the charging input interface of the charged vehicle again. The primary controller 250 may send a charging instruction to the first target charged vehicle. The first target charged vehicle may communicate with the primary controller 250 in response to the charging instruction, and burn a required charging power and the like required by the first target charged vehicle to the primary controller 250. Then, the primary controller 250 may control a contactor of a charging interface corresponding to the first target charged vehicle to be turned on, so that charging of the first target charged vehicle is resumed.

Manner 6: The primary controller 250 may control a terminal controller corresponding to the first target charged vehicle to send a charging suspend instruction to the first target charged vehicle, and the first target charged vehicle suspends charging in response to the charging suspend instruction. The primary controller 250 may control the terminal controller corresponding to the first target charged vehicle to send a charging resume instruction to the first target charged vehicle, and the first target charged vehicle resumes charging in response to the charging resume instruction, so that charging of the first target charged vehicle is resumed.

Manner 7: The primary controller 250 may control a terminal controller corresponding to the first target charged vehicle to turn off a contactor of a charging interface corresponding to the first target charged vehicle, so that charging of the first target charged vehicle is stopped. The primary controller 250 may control the terminal controller corresponding to the first target charged vehicle to turn on the contactor of the charging interface corresponding to the first target charged vehicle, so that charging of the first target charged vehicle is resumed.

Manner 8: The primary controller 250 may control a terminal controller corresponding to the first target charged vehicle to send a charging suspend instruction to the first target charged vehicle, the first target charged vehicle suspends charging in response to the charging suspend instruction, and then the primary controller 250 may control the terminal controller corresponding to the first target charged vehicle to turn off a contactor of a charging interface corresponding to the first target charged vehicle, so that charging of the first target charged vehicle is stopped. The primary controller 250 may control the terminal controller corresponding to the first target charged vehicle to send a charging resume instruction to the first target charged vehicle, the first target charged vehicle resumes charging in response to the charging resume instruction, and then the primary controller 250 may control the terminal controller corresponding to the first target charged vehicle to turn on the contactor of the charging interface corresponding to the first target charged vehicle, so that charging of the first target charged vehicle is resumed.

Manner 9: The primary controller 250 may control a terminal controller corresponding to the first target charged vehicle to send a charging end instruction to the first target charged vehicle, and the first target charged vehicle ends charging in response to the charging end instruction, so that charging of the first target charged vehicle is stopped. An operator inserts the charging connector 210 into a charging input interface of the charged vehicle again, the primary controller 250 may send a charging instruction to the first target charged vehicle, and the first target charged vehicle enters a charging mode in response to the charging instruction, to resume charging.

Manner 10: The primary controller 250 may control a terminal controller corresponding to the first target charged vehicle to send a charging end instruction to the first target charged vehicle, the first target charged vehicle ends charging in response to the charging end instruction, and then the primary controller 250 may control the terminal controller corresponding to the first target charged vehicle to turn off a contactor of a charging interface corresponding to the first target charged vehicle, so that charging of the first target charged vehicle is stopped. An operator inserts the charging connector 210 into a charging input interface of the charged vehicle again. The primary controller 250 may control the terminal controller corresponding to the first target charged vehicle to send a charging instruction to the first target charged vehicle. The first target charged vehicle enters a charging mode in response to the charging instruction. Then, the primary controller 250 may control the terminal controller corresponding to the first target charged vehicle to turn on the contactor of the charging interface corresponding to the first target charged vehicle, so that charging of the first target charged vehicle is resumed.

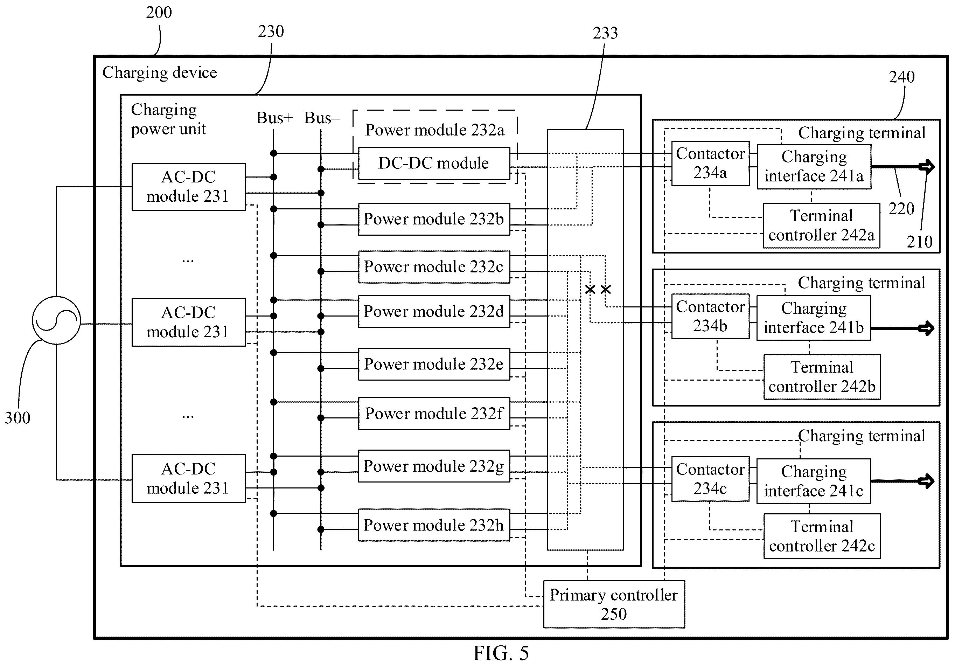

FIG. 5 is a diagram of a structure of a charging device in a charging scenario according to still another embodiment of this application. Refer to FIG. 4 and FIG. 5. A dashed line in the power allocation module 233 indicates that a power module is connected to a corresponding charging interface. For example, there are eight power modules, a rated power of each power module is 60 kW, and a maximum output power of one charging interface is 480 kW. A charged vehicle 100a is connected to a charging interface 241a via a charging connector 210 for charging, and a charged vehicle 100b is connected to a charging interface 241b via a charging connector 210 for charging. A required charging power required by the charged vehicle 100a is 120 kW, a vehicle management system in the charged vehicle 100a reports the required charging power 120 kW to a primary controller 250, and the primary controller 250 may control a switch in a power allocation module 233 to connect two power modules 232a and 232b to the charging interface 241a, so that the charging interface 241a occupies the two power modules 232a and 232b, and the charging interface 241a outputs a charging power of 120 kW, to charge a power battery in the charged vehicle 100a. A required charging power required by the charged vehicle 100b is 20 kW, a vehicle management system in the charged vehicle 100b reports the required charging power 20 kW to the primary controller 250, and the primary controller 250 may control the switch in the power allocation module 233 to connect one power module 232c to the charging interface 241b, so that the charging interface 241b occupies the power module 232c, and the charging interface 241b outputs a charging power of 20 kW. Subsequently, there is a charged vehicle 100c. A required charging power required by the charged vehicle 100c is 380 kW, and a vehicle management system in the charged vehicle 100c reports the required charging power 380 kW to the primary controller 250. However, in this case, there are five remaining power modules 232d to 232h that are not occupied in a charging device 200. Because the other power modules are occupied by the other charging interfaces, the primary controller 250 can only preferentially control the switch in the power allocation module 233 to connect the five power modules 232d to 232h to the charging interface 241c, so that a maximum output power of the charging interface 241c is 300 kW. As a result, the required charging power required by the charged vehicle 100c cannot be met. Therefore, the primary controller 250 may send a charging suspend instruction to the charged vehicle 100b, and the charged vehicle 100b suspends charging. The primary controller 250 further controls a contactor 234b to be turned off, and the charged vehicle 100 stops charging. Therefore, the switch in the power allocation module 233 may be controlled to disconnect the power module 232c from the charging interface 241b (for example, "×" in FIG. 5 indicates an open circuit), and connect the power module 232c to the charging interface 241c, thereby increasing a charging power for the charged vehicle 100c, and improving power utilization of the power module. Subsequently, if the required charging power of the charged vehicle 100c is reduced by 60 kW, the primary controller 250 may control the switch in the power allocation module 233 to disconnect one power module (for example, 232g) in the power modules 232c to 232h from the charging interface 241c, and connect the power module (for example, 232g) to the charging interface 241b. In addition, a charging resume instruction is sent to the charged vehicle 100b, and the charged vehicle 100b resumes charging. The primary controller 250 further controls the contactor 234b to be turned on, so that a power output by the power module (for example, 232g) can be output to the charging interface 241b via the contactor 234b and the switch in the power allocation module 233, and the charged vehicle 100b resumes charging.

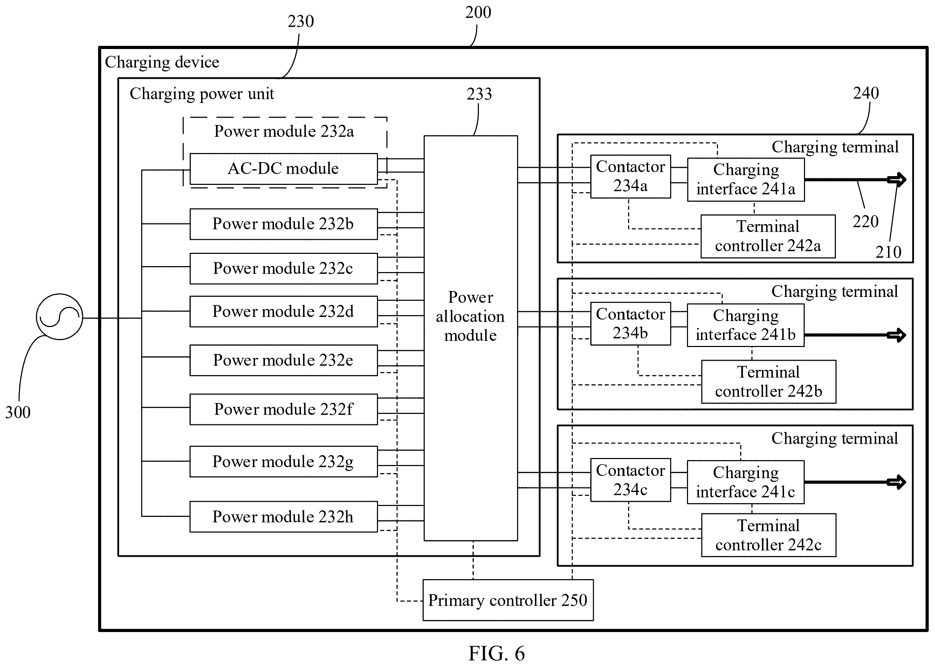

FIG. 6 is a diagram of a structure of a charging device according to still another embodiment of this application. Refer to FIG. 6. In this embodiment of this application, a charging device 200 may be disposed as a split-type direct current charging pile. The charging device 200 may include a plurality of power modules 232a to 232h, a power allocation module 233, a plurality of contactors 234a to 234c, a plurality of charging interfaces 241a to 241c, a primary controller 250, a plurality of terminal controllers 242a to 242c, cables 220, and charging connectors 210. Different from the embodiment shown in FIG. 2, in this embodiment of this application, the power modules 232a to 232h are directly connected to an alternating current power supply 300, convert an alternating current (for example, mains) from the alternating current power supply 300 into a direct current, and output the direct current to a corresponding charging interface via the power allocation module 233. In addition, the power modules 232a to 232h may include AC-DC modules, and rated powers of the power modules 232a to 232h may be rated powers of the AC-DC modules. In addition, the rated powers of the AC-DC modules in different power modules may be the same, or may be partially the same and partially different, or may be all different. Other content in this embodiment of this application may be basically the same as the content in the foregoing embodiments. Details are not described herein again.

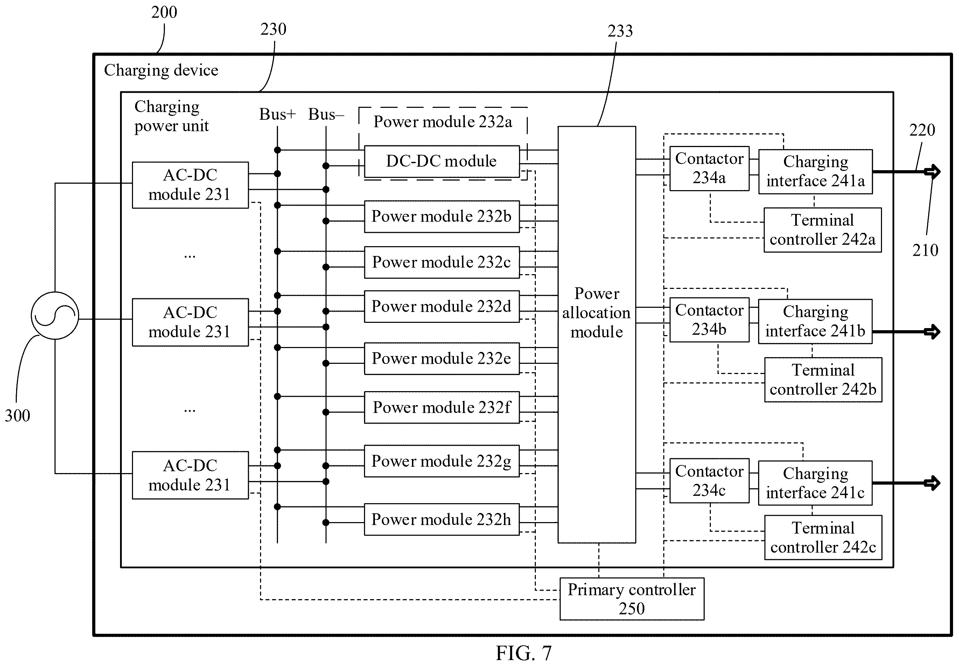

FIG. 7 is a diagram of a structure of a charging device according to still another embodiment of this application. Refer to FIG. 7. In this embodiment of this application, a charging device 200 may be disposed as an integral direct current charging pile. The charging device 200 may include a plurality of AC-DC modules 231, a plurality of power modules 232a to 232h, a power allocation module 233, a plurality of contactors 234a to 234c, a plurality of charging interfaces 241a to 241c, a primary controller 250, cables 220, and charging connectors 210. Different from the embodiment shown in FIG. 2, in this embodiment of this application, the integral direct current charging pile is not provided with a charging terminal 240, and the charging connector 210 is directly connected to a charging power unit 230 via the cable 220. In this case, the charging power unit 230 of the integral direct current charging pile is provided with the plurality of AC-DC modules 231, a positive direct current bus Bus+, a negative direct current bus Bus-, the plurality of power modules 232a to 232h, the power allocation module 233, the plurality of charging interfaces 241a to 241c, the primary controller 250, the cables 220, and the charging connectors 210. In addition, there may be two, three, or more charging connectors 210. This is not limited herein. Other content in this embodiment of this application may be basically the same as the content in the foregoing embodiments. Details are not described herein again.

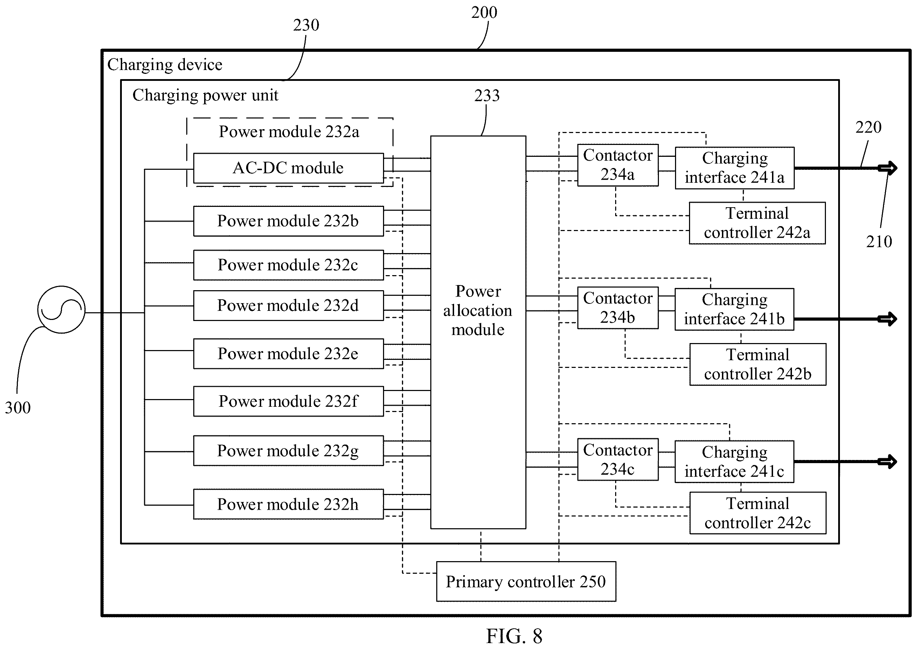

FIG. 8 is a diagram of a structure of a charging device according to still another embodiment of this application. Refer to FIG. 8. In this embodiment of this application, a charging device 200 may be disposed as an integral direct current charging pile. The charging device 200 may include a plurality of power modules 232a to 232h, a power allocation module 233, a plurality of contactors 234a to 234c, a plurality of charging interfaces 241a to 241c, a primary controller 250, cables 220, and charging connectors 210. Different from the embodiment shown in FIG. 7, in this embodiment of this application, the power modules 232a to 232h are directly connected to an alternating current power supply 300, convert an alternating current (for example, mains) from the alternating current power supply 300 into a direct current, and output the direct current to a corresponding charging interface via the power allocation module 233. In addition, the power modules 232a to 232h may include AC-DC modules, and rated powers of the power modules 232a to 232h may be rated powers of the AC-DC modules. In addition, the rated powers of the AC-DC modules in different power modules may be the same, or may be partially the same and partially different, or may be all different. Other content in this embodiment of this application may be basically the same as the content in the foregoing embodiments. Details are not described herein again.

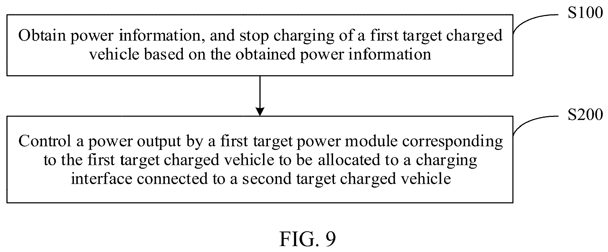

Based on this, FIG. 9 is a flowchart of a power allocation method according to an embodiment of this application. The power allocation method is further provided in this embodiment of this application and may include:
S100: Obtain power information, and stop charging of a first target charged vehicle based on the obtained power information, where the power information includes an output power of each of charging interfaces and a required charging power of each of charged vehicles; and
S200: Control a power output by a first target power module corresponding to the first target charged vehicle to be allocated to a charging interface connected to a second target charged vehicle, where a required charging power of the second target charged vehicle is greater than an output power, existing before the first target power module is allocated, of the charging interface connected to the second target charged vehicle.

The foregoing content is merely specific implementations of this application, but is not intended to limit the protection scope of this application. Any variation or replacement readily figured out by a person skilled in the art in the technical scope disclosed in this application shall fall within the protection scope of this application.

## Claims

1. A charging device, comprising a plurality of power modules, a power allocation module, a primary controller, and a plurality of charging interfaces, wherein the plurality of power modules are connected to the plurality of charging interfaces via the power allocation module;
the plurality of power modules comprise a first target power module and a second target power module, the first target power module is configured to charge a first target charged vehicle, and the second target power module is configured to charge a second target charged vehicle;
the charging interface is configured to connect to a charged vehicle;
the power allocation module is configured to allocate, to the charging interface, a power output by the power module; and
the primary controller is configured to:
obtain power information, and stop charging of the first target charged vehicle based on the obtained power information, wherein the power information comprises an output power of each of the charging interfaces and a required charging power of each of the charged vehicles; and
control the power allocation module to allocate, to a charging interface connected to the second target charged vehicle, a power output by the first target power module corresponding to the first target charged vehicle, wherein a required charging power of the second target charged vehicle is greater than an output power, existing before the first target power module is allocated, of the charging interface connected to the second target charged vehicle.

2. The charging device according to claim 1, wherein stopping charging of the first target charged vehicle based on the obtained power information comprises:
in response to a sum of rated powers of power modules corresponding to all the charging interfaces being greater than a sum of the output powers of all the charging interfaces and the sum of the rated powers of the power modules corresponding to all the charging interfaces being less than a sum of the required charging powers of all the charged vehicles, stopping charging of the first target charged vehicle.

3. The charging device according to claim 1 or 2, wherein the first target charged vehicle comprises at least one of the following charged vehicles:
a charged vehicle connected to a charging interface corresponding to a minimum output power, wherein the minimum output power is a smallest value in the output powers of all the charging interfaces;
a charged vehicle corresponding to a minimum required charging power, wherein the minimum required charging power is a smallest value in the required charging powers of all the charged vehicles;
a charged vehicle corresponding to a maximum battery state of charge, wherein the maximum battery state of charge is a largest value in battery states of charge of all the charged vehicles;
a charged vehicle connected to a charging interface corresponding to a first target output power, wherein the first target output power is an output power that is in the output powers of all the charging interfaces and that is less than a first power threshold;
a charged vehicle corresponding to a first target required charging power, wherein the first target required charging power is a required charging power that is in the required charging powers of all the charged vehicles and that is less than a second power threshold; and
a charged vehicle corresponding to a target battery state of charge, wherein the target battery state of charge is a battery state of charge that is in the battery states of charge of all the charged vehicles and that is greater than a battery state of charge threshold.

4. The charging device according to any one of claims 1 to 3, wherein the second target charged vehicle comprises at least one of the following charged vehicles:
a charged vehicle corresponding to a maximum required charging power, wherein the maximum required charging power is a largest value in second target required charging powers, and the second target required charging power is a required charging power that is in the required charging powers of all the charged vehicles and that is greater than output powers of charging interfaces corresponding to all the charged vehicles; and
a charged vehicle corresponding to a maximum required value, wherein the maximum required value is a largest value in required values corresponding to all the charged vehicles, and the required value corresponding to the charged vehicle is (B-A)/C, wherein A represents an output power, existing before the first target power module is allocated, of a charging interface corresponding to the charged vehicle, B represents a required charging power of the charged vehicle, and C represents a rated power of the first target power module.

5. The charging device according to any one of claims 1 to 4, wherein the primary controller is further configured to:
control the power allocation module to allocate a first quantity of first target power modules to the charging interface connected to the second target charged vehicle, wherein the first quantity is less than or equal to a total quantity of power modules corresponding to the first target charged vehicle.

6. The charging device according to any one of claims 1 to 5, wherein the primary controller is further configured to:
control the power allocation module to allocate a third target power module to a charging interface connected to the first target charged vehicle, wherein an output power of the third target power module is zero.

7. The charging device according to any one of claims 1 to 6, wherein the primary controller is further configured to:
send a charging suspend instruction to the first target charged vehicle, to stop charging of the first target charged vehicle; and
send a charging resume instruction to the first target charged vehicle, to resume charging of the first target charged vehicle.

8. The charging device according to claim 7, wherein the charging device further comprises a plurality of contactors, and each of the charging interfaces is connected to the power allocation module via the contactor; and
the primary controller is further configured to:
control a contactor connected to the charging interface corresponding to the first target charged vehicle to be turned off or on.

9. The charging device according to any one of claims 1 to 6, wherein the charging device further comprises a plurality of terminal controllers, and the plurality of terminal controllers one-to-one correspond to the plurality of charging interfaces; and
the primary controller is further configured to:
control a terminal controller corresponding to the first target charged vehicle to send a charging suspend instruction to the first target charged vehicle, to stop charging of the first target charged vehicle; and
control the terminal controller corresponding to the first target charged vehicle to send a charging resume instruction to the first target charged vehicle, to charge the first target charged vehicle.

10. The charging device according to claim 9, wherein the charging device further comprises a plurality of contactors, and each of the charging interfaces is connected to the power allocation module via the contactor; and
the primary controller is further configured to:
control the terminal controller corresponding to the first target charged vehicle to turn off or on a contactor of the corresponding charging interface.

11. A power allocation method, comprising:
obtaining power information, and stopping charging of a first target charged vehicle based on the obtained power information, wherein the power information comprises an output power of each of the charging interfaces and a required charging power of each of the charged vehicles; and
controlling a power output by a first target power module corresponding to the first target charged vehicle to be allocated to a charging interface connected to a second target charged vehicle, wherein a required charging power of the second target charged vehicle is greater than an output power, existing before the first target power module is allocated, of the charging interface connected to the second target charged vehicle.

12. The power allocation method according to claim 11, wherein stopping charging of the first target charged vehicle based on the obtained power information comprises:
in response to a sum of rated powers of power modules corresponding to all the charging interfaces being greater than a sum of the output powers of all the charging interfaces and the sum of the rated powers of the power modules corresponding to all the charging interfaces being less than a sum of the required charging powers of all the charged vehicles, stopping charging of the first target charged vehicle.

13. The power allocation method according to claim 11 or 12, wherein the first target charged vehicle comprises at least one of the following charged vehicles:
a charged vehicle connected to a charging interface corresponding to a minimum output power, wherein the minimum output power is a smallest value in the output powers of all the charging interfaces;
a charged vehicle corresponding to a minimum required charging power, wherein the minimum required charging power is a smallest value in the required charging powers of all the charged vehicles;
a charged vehicle corresponding to a maximum battery state of charge, wherein the maximum battery state of charge is a largest value in battery states of charge of all the charged vehicles;
a charged vehicle connected to a charging interface corresponding to a first target output power, wherein the first target output power is an output power that is in the output powers of all the charging interfaces and that is less than a first power threshold;
a charged vehicle corresponding to a first target required charging power, wherein the first target required charging power is a required charging power that is in the required charging powers of all the charged vehicles and that is less than a second power threshold; and
a charged vehicle corresponding to a target battery state of charge, wherein the target battery state of charge is a battery state of charge that is in the battery states of charge of all the charged vehicles and that is greater than a battery state of charge threshold.

14. The power allocation method according to any one of claims 11 to 13, wherein the second target charged vehicle comprises at least one of the following charged vehicles:
a charged vehicle corresponding to a maximum required charging power, wherein the maximum required charging power is a largest required charging power in second target required charging powers, and the second target required charging power is a required charging power that is in the required charging powers of all the charged vehicles and that is greater than output powers of charging interfaces corresponding to all the charged vehicles; and
a charged vehicle corresponding to a maximum required value, wherein the maximum required value is a largest value in required values corresponding to all the charged vehicles, and the required value corresponding to the charged vehicle is (B-A)/C, wherein A represents an output power, existing before the first target power module is allocated, of a charging interface corresponding to the charged vehicle, B represents a required charging power of the charged vehicle, and C represents a rated power of the first target power module.

15. The power allocation method according to any one of claims 11 to 14, wherein controlling the first target power module corresponding to the first target charged vehicle to be allocated to the charging interface connected to the second target charged vehicle comprises:
controlling a first quantity of first target power modules to be allocated to the charging interface connected to the second target charged vehicle, wherein the first quantity is less than or equal to a total quantity of power modules corresponding to the first target charged vehicle.

16. The power allocation method according to any one of claims 11 to 15, further comprising:
controlling a third target power module to be allocated to a charging interface connected to the first target charged vehicle, wherein an output power of the third target power module is zero.

17. The power allocation method according to any one of claims 11 to 16, further comprising:
sending a charging suspend instruction to the first target charged vehicle, to stop charging of the first target charged vehicle; and
sending a charging resume instruction to the first target charged vehicle, to resume charging of the first target charged vehicle.

18. The power allocation method according to claim 17, further comprising:
controlling a contactor connected to the charging interface corresponding to the first target charged vehicle to be turned off or on.

19. The power allocation method according to any one of claims 11 to 16, further comprising:
controlling a terminal controller corresponding to the first target charged vehicle to send a charging suspend instruction to the first target charged vehicle, to stop charging of the first target charged vehicle; and
controlling the terminal controller corresponding to the first target charged vehicle to send a charging resume instruction to the first target charged vehicle, to resume charging of the first target charged vehicle.

20. The power allocation method according to claim 19, further comprising:
controlling the terminal controller corresponding to the first target charged vehicle to turn off or on a contactor of the corresponding charging interface.
